# FASCICULE DE BREVET EUROPEEN

(11) **EP 1 454 048 B1**
(45) Date de publication et mention de la délivrance du brevet: **19.10.2005**
(21) Numéro de dépôt: 02772462.4
(22) Date de dépôt: 26.07.2002
(51) Int. Cl.: F02D 41/06

(54) **PROCEDE D'ARRET ET DE REDEMARRAGE D'UN MOTEUR A COMBUSTION INTERNE A INJECTION INDIRECTE**
VERFAHREN ZUM ANHALTEN UND NEUSTARTEN EINES VERBRENNUNGSMOTORS MIT INDIREKTER EINSPRITZUNG
METHOD OF STOPPING AND RESTARTING AN INTERNAL COMBUSTION ENGINE WITH INDIRECT INJECTION

(30) Priorité: 27.07.2001 FR 0110131
(43) Date de publication de la demande: 08.09.2004
(73) Titulaire: Peugeot Citroen Automobiles S.A., 78140 Vélizy Villacoublay (FR)
(72) Inventeur: CONDEMINE, Eric, F-91170 VIRY CHATILLON (FR); BASSO, Vincent, F-91640 BRIIS SOUS FORGES (FR)
(74) Mandataire: Bouget, Lucien
(86) Numéro de dépôt international: PCT/FR2002/002693
(87) Numéro de publication internationale: WO 2003/012273

(56) Documents cités:
- EP-A- 0 990 784
- EP-A- 1 036 928
- WO-A-01/44636
- WO-A-01/48373
- DE-A- 19 527 503
- US-A- 4 364 343
- US-A- 6 098 585
- PATENT ABSTRACTS OF JAPAN vol. 2000, no. 23, 10 février 2001 (2001-02-10) & JP 2001 152891 A (HITACHI LTD), 5 juin 2001 (2001-06-05)

## Description

L'invention concerne un procédé d'arrêt et de redémarrage d'un moteur à combustion interne à injection indirecte.

Les moteurs à combustion interne comportent au moins un piston mobile de manière alternative dans un cylindre et généralement plusieurs pistons montés mobiles chacun dans un cylindre, le piston ou chacun des pistons étant relié à un vilebrequin par une bielle entraînant le vilebrequin en rotation autour d'un axe.

Les conditions de redémarrage d'un moteur thermique, après arrêt des organes mobiles du moteur, c'est-à-dire en particulier les pistons et le vilebrequin, sont fortement tributaires de la position d'arrêt des organes mobiles. La puissance nécessaire pour le redémarrage d'un moteur peut varier par exemple entre une valeur minimale et une valeur maximale qui est de 30 % supérieure à la valeur minimale. De plus, le temps nécessaire pour le redémarrage du moteur (par exemple compté en nombre de tours du vilebrequin) dépend également fortement des conditions d'arrêt du moteur, aussi bien dans le cas des moteurs à allumage commandé que des moteurs à allumage par compression.

Dans le cas d'un moteur à quatre cylindres en ligne, il existe quatre positions possibles d'arrêt du moteur, dans lesquelles les positions des pistons sont différentes, entre les points morts haut et les points morts bas de ces pistons. La position d'arrêt d'un moteur à quatre cylindres est ainsi définie à 180° près, c'est-à-dire avec une approximation d'un demi-tour sur la position du vilebrequin.

De plus, autour de ces positions d'arrêt, les frottements des organes mobiles du moteur provoquent une dispersion de l'ordre de plusieurs dizaines de degrés (par exemple 30°).

Les conséquences de ces dispersions des points d'arrêt du moteur sont des irrégularités au démarrage, des temps de démarrage importants et une pollution qui peut être importante et qui est mal maîtrisée, du fait d'une combustion incomplète dans les cylindres.

On a proposé de régler, pendant l'arrêt du moteur, ou de rectifier, après l'arrêt du moteur, la position des organes mobiles du moteur, en utilisant une machine électrique auxiliaire. Il est donc nécessaire de mettre en oeuvre une machine électrique spécifique et des moyens de commande de cette machine électrique pour le freinage ou la remise en position du moteur dans sa position d'arrêt. Dans le cas des moteurs de conception moderne à injection indirecte, c'est-à-dire à injection de carburant dans les tubulures d'admission du moteur, on dispose d'un moyen particulièrement précis et sensible associé à des moyens de contrôle tels qu'un calculateur, pour synchroniser l'injection de carburant avec les positions des pistons dans les cylindres.

Le système d'injection de ces moteurs et ces moyens de commande n'ont cependant jamais été utilisés jusqu'ici pour assurer un réglage de l'arrêt et du redémarrage d'un moteur dans une position déterminée.

Dans le cas des moteurs à injection indirecte (c'est-à-dire à injection dans les tubulures d'admission des cylindres) et à allumage commandé, le temps de démarrage est relativement long (généralement supérieur à 0,5 seconde). En effet, le calculateur des moteurs de véhicules modernes doit passer par une succession d'étapes bien précises avant de se trouver dans une configuration de fonctionnement normale pour commander le moteur après son démarrage. Le temps consacré à cette procédure augmente considérablement les temps de démarrage qui sont généralement beaucoup plus longs que les démarrages effectués avec un système classique comportant un carburateur et un rupteur.

En effet, les calculateurs des véhicules modernes doivent synchroniser l'injection et l'allumage, puis donner l'ordre d'injecter et enfin commander l'allumage, et ceci à chaque démarrage.

De plus, cette procédure pollue puisque les premières injections dans la tubulure ne sont pas synchronisées ; les injections sont réalisées sur tous ou presque tous les cylindres ; des charges d'essence fraîches sont libérées et peuvent ainsi détériorer le catalyseur généralement placé sur la ligne d'échappement et/ou polluer.

Il apparaît nécessaire de diminuer les temps de démarrage et délimiter les émissions polluantes des moteurs modernes, en particulier pour la mise en oeuvre d'une fonction appelée "stop and start" qui est mise en oeuvre automatiquement par le calculateur du véhicule automobile pour arrêter et redémarrer le véhicule, en fonction des conditions de roulage. En particulier, lorsque le véhicule s'arrête, par exemple du fait de l'arrêt d'une file de véhicules dans laquelle il se trouve, le calculateur commande l'arrêt du moteur puis son redémarrage, lorsque le véhicule peut se déplacer à nouveau.

Dans ce cas, l'arrêt du moteur étant généralement de courte durée, le démarrage est effectué avec le moteur chaud et il est nécessaire de procurer au moteur à allumage commandé des conditions de redémarrage à chaud très rapide et ne produisant pas de pollution supplémentaire dans les gaz d'échappement.

Le but de l'invention est donc de proposer un procédé d'arrêt et de redémarrage d'un moteur à combustion interne à injection indirecte et à allumage commandé comportant au moins un cylindre dans lequel se déplace un piston et une tubulure d'admission de carburant communiquant avec le cylindre et une partie tournante mise en rotation par le piston, par l'intermédiaire d'une bielle qui permette d'effectuer des redémarrages à chaud très rapides et ne produisant pas de pollution supplémentaire dans les gaz d'échappement.

Dans ce but :
- on mesure en continu la vitesse de rotation et la position du piston et de la partie tournante du moteur, et on coupe l'injection de carburant pour des valeurs prédéterminées de la vitesse et de la position angulaire de la partie tournante du moteur pour obtenir l'arrêt du piston et de la partie tournante dans une position prédéterminée,
- on injecte une charge de carburant dans la tubulure d'admission du cylindre en phase d'admission pendant un dernier tour du moteur avant l'arrêt en position prédéterminée,
- au redémarrage du moteur après l'arrêt par mise en rotation de la partie tournante du moteur, on repère la réalisation de la phase de compression dans le cylindre et on réalise un allumage de la charge dans le cylindre en phase de compression, et
- on effectue l'injection et l'allumage de charges successives dans l'au moins un cylindre suivant une séquence prédéterminée, afin d'optimiser la consommation et les émissions et de limiter la survitesse du moteur au démarrage, favorisant ainsi la qualité du démarrage.

Pour effectuer le redémarrage, selon l'invention, on injecte une quantité voulue de carburant dans le cylindre qui est déterminée lors de la mise au point des démarrages rapides à chaud.

Afin de bien faire comprendre l'invention, on va décrire à titre d'exemple un procédé d'arrêt et de redémarrage d'un moteur à combustion interne à allumage commandé et à injection indirecte, selon l'invention.
La figure 1 est un schéma montrant les moyens utilisés pour la mise en oeuvre du procédé d'arrêt et de redémarrage d'un moteur à injection directe et à allumage commandé, suivant l'invention.
La figure 2 est un diagramme comparatif montrant les phases d'arrêt d'un moteur dans le cas d'un arrêt suivant l'art antérieur et d'un moteur dont l'arrêt est commandé suivant le procédé de l'invention.
La figure 3 est un diagramme comparatif montrant les phases de redémarrage à chaud d'un moteur commandé suivant l'art antérieur et d'un moteur commandé selon le procédé de l'invention.
La figure 4 est une vue schématique montrant les moyens de mesure de la position angulaire d'un vilebrequin d'un moteur à allumage commandé, utilisés lors d'un redémarrage rapide du moteur, selon le procédé de l'invention.
La figure 5 est un logigramme montrant le déroulement d'un procédé de redémarrage d'un moteur à allumage commandé, suivant l'invention.
La figure 6 est un diagramme comparatif montrant les courbes de montée en régime, lors du démarrage d'un moteur par le procédé de l'invention et par un procédé suivant l'art antérieur.

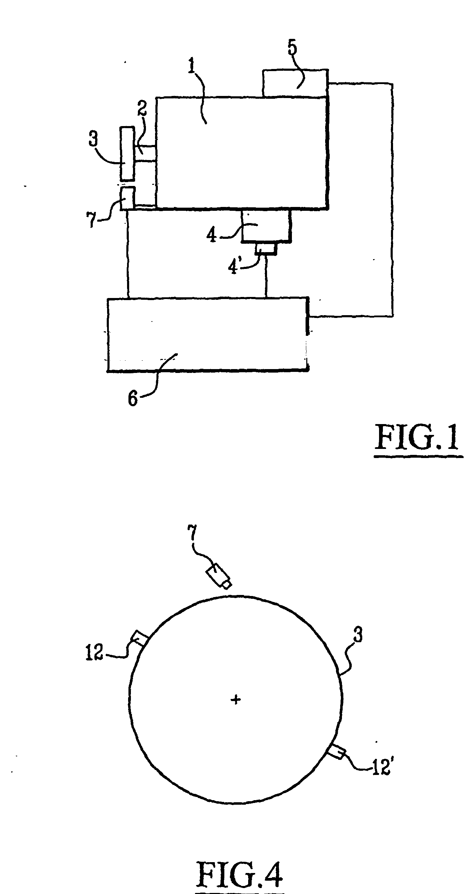

Sur la figure 1, on a représenté, de manière schématique, un moteur thermique 1 qui est par exemple un moteur à quatre cylindres en ligne.

Le moteur 1 comporte quatre cylindres (désignés par la suite par C₁, C₂, C₃, C₄) dans chacun desquels se déplace un piston relié, par une bielle, à un vilebrequin 2 solidaire, à l'une de ses extrémités, d'un volant 3.

Les pistons à mouvements alternatifs, les bielles ainsi que le vilebrequin 2 et le volant 3 mobiles en rotation constituent l'ensemble des éléments mobiles du moteur 1.

Le moteur 1 comporte un démarreur 4 qui peut être constitué par un moteur électrique ou par un alternateur réversible. Le démarreur 4 comporte un élément de commande 4' permettant d'établir ou de couper l'alimentation électrique du démarreur 4 à partir de la batterie du véhicule automobile.

Le moteur 1 est un moteur à injection indirecte de carburant dans les tubulures d'admission de chacun des cylindres du moteur. Les injecteurs sont commandés par un boîtier de commande électronique 5 qui permet de réaliser la synchronisation des injections avec le déplacement des éléments mobiles du moteur 1.

Le véhicule automobile sur lequel est monté le moteur 1 comporte un calculateur 6 permettant d'assurer différentes fonctions de surveillance et de commande du véhicule automobile et en particulier du moteur 1.

En particulier, le calculateur 6 est relié au boîtier 5 de commande de l'injection de carburant dans les cylindres du moteur, de manière à assurer une synchronisation de l'injection de carburant avec la position des pistons et un arrêt de l'injection de carburant dans les tubulures d'admission des cylindres, à un instant déterminé pour obtenir un arrêt du moteur dans une position voulue.

Un capteur 7 (ou plusieurs capteurs) sont disposés à proximité du volant 3 pour mesurer la vitesse instantanée de rotation du moteur et pour déterminer à chaque instant la position angulaire du volant 3 et du vilebrequin 2 correspondant à une position définie de chacun des pistons à l'intérieur des cylindres en ligne du moteur 1.

Les informations du capteur 7 sont transmises au calculateur 6 qui est programmé pour déterminer, lorsqu'un arrêt du moteur est commandé, l'instant précis auquel l'ordre de coupure de l'injection doit être transmis au boîtier 5.

Dans le cas où le calculateur 6 commande une fonction "stop and start", c'est-à-dire un arrêt et un redémarrage automatique du moteur 1 du véhicule automobile en fonction des conditions de roulage, le calculateur 6 est relié au boîtier 4' de commande du démarreur 4.

Dans le cas d'un moteur à allumage commandé, le boîtier de commande de l'allumage est également relié au calculateur 6. Dans ce cas, on supposera sur la figure 1 que le boîtier 5 commande aussi bien l'injection de carburant dans les cylindres que l'allumage du carburant injecté dans les cylindres.

Dans le cadre de la mise en oeuvre de la fonction "stop and start", le calculateur 6 reçoit des informations qui lui permettent de déterminer si un ordre d'arrêt du moteur 1 du véhicule automobile doit être donné. Lorsque les conditions d'un arrêt du moteur sont réunies, le calculateur 6 détermine, à partir de la vitesse et de la position angulaire de la partie tournante 2, 3 du moteur transmises par des capteurs tels que le capteur 7, l'instant exact auquel un ordre d'interruption de l'injection de carburant et/ou d'interruption de l'allumage doit être transmis au boîtier de commande 5.

Le programme du calculateur permet de déterminer l'instant exact auquel l'ordre d'interruption de l'injection doit être transmis pour obtenir un arrêt du moteur dans une position bien déterminée qui est choisie pour faciliter le redémarrage ultérieur du moteur.

La position d'arrêt est mise en mémoire dans le calculateur, pour sa prise en compte lors d'un redémarrage ultérieur du moteur.

Dans le cas d'un moteur à allumage commandé, on peut commander de manière simultanée l'interruption de l'allumage et l'interruption de l'injection de carburant.

On peut également effectuer l'interruption de l'injection de carburant et de l'allumage à des instants séparés. On peut ainsi éviter la production de carburant imbrûlé dans les cylindres et la ligne d'échappement, ce qui permet de diminuer la pollution par les gaz d'échappement et de limiter la détérioration du pot catalytique.

De manière générale, l'interruption de l'injection de carburant dans les cylindres du moteur à un instant parfaitement déterminé en fonction de la vitesse et de la position angulaire du vilebrequin permet d'éviter, en particulier, de déclencher l'arrêt du moteur au milieu d'une phase d'injection dans un cylindre. On diminue ainsi la pollution des gaz d'échappement et on augmente la durée de vie du pot catalytique, dans le cas d'un moteur à essence et du filtre à particules (FAP) dans le cas d'un moteur diesel. On améliore ainsi considérablement l'efficacité du système "stop and start" et on augmente ses possibilités d'intégration dans la conduite du moteur du véhicule automobile.

A partir de la position précise d'arrêt du moteur qui est gardée en mémoire, on peut déterminer facilement dans quel cylindre il est nécessaire d'injecter le carburant en premier, au moment du redémarrage.

Il n'est donc plus nécessaire, comme dans le cas de l'art antérieur, d'alimenter simultanément tous les cylindres, ce qui entraîne une pollution des gaz d'échappement et diminue la durée de vie du pot catalytique (ou du filtre à particules).

La quantité de carburant injectée et l'angle d'allumage des premières combustions sont spécifiques au démarrage rapide à chaud. Ce fonctionnement en boucle ouverte est déterminé par une mise au point spécifique du redémarrage à chaud. La régulation de richesse est activée le plus rapidement possible afin d'éviter toute pollution. L'angle d'allumage permet en particulier de jouer sur la montée en régime du moteur, en vue d'améliorer la qualité et la douceur du démarrage.

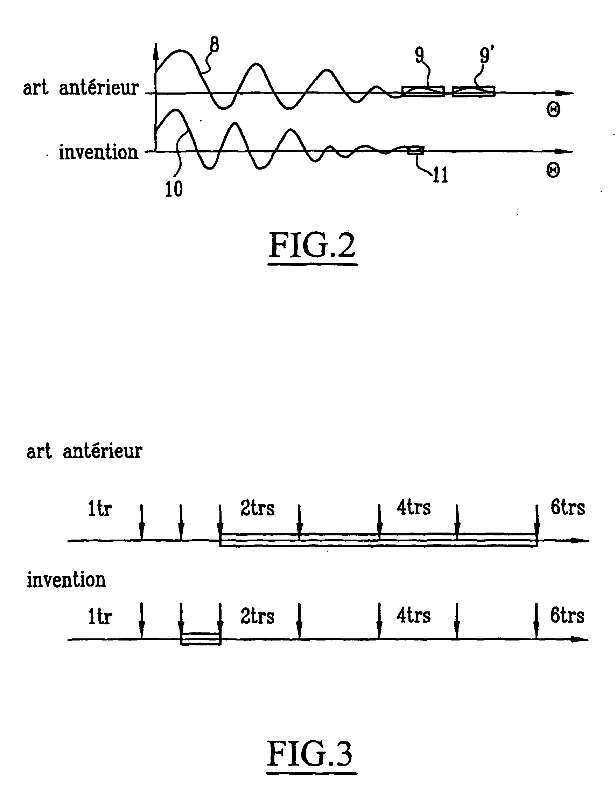

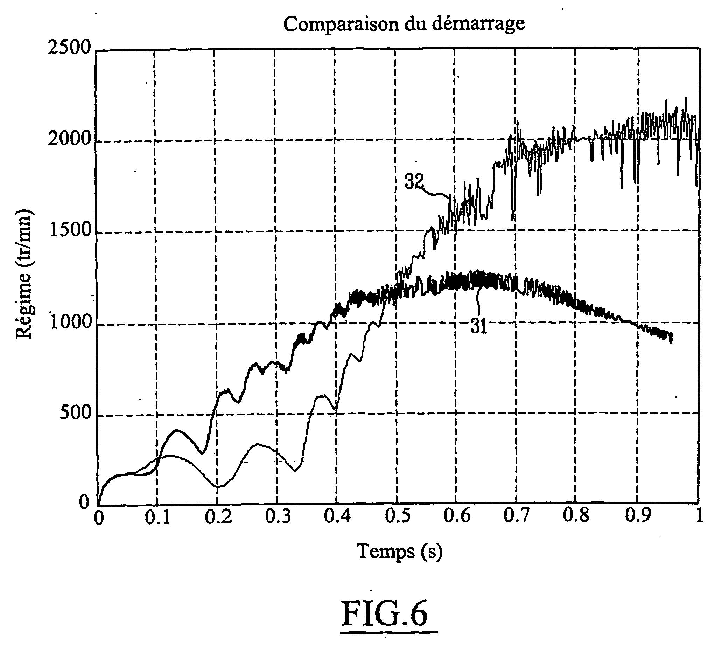

De plus, le redémarrage est obtenu très rapidement et avec une régularité considérablement accrue, comme il sera expliqué plus loin en regard de la figure 3 et de la figure 6.

Enfin, le fait que la position du vilebrequin au démarrage est parfaitement déterminée et connue permet de choisir une machine électrique de démarrage ayant des caractéristiques parfaitement adaptées.

Sur la figure 2, on a représenté sous forme d'un diagramme vitesse de rotation du moteur en fonction de la position angulaire du vilebrequin, les phases d'arrêt du moteur, dans le cas de l'art antérieur (courbe supérieure 8) et dans le cas de l'invention (courbe inférieure 10).

Dans le cas de l'art antérieur, l'arrêt peut être obtenu dans deux plaes 9 et 9', la position angulaire du vilebrequin s'étendant de part et d'autre d'une position centrale, sur 30°. Il existe donc deux possibilités d'arrêt avec une imprécision de 30° de part et d'autre de la position d'arrêt théorique, soit quatre positions différentes selon les phases, sur un cycle moteur.

Dans le cas de l'invention (courbe inférieure 10), l'arrêt peut être obtenu dans une plage 11 unique de position angulaire du vilebrequin.

Comme il est visible sur la figure 3, lors d'un redémarrage du moteur après un arrêt commandé suivant l'art antérieur (partie supérieure de la figure), le démarrage du moteur, suivant la position d'arrêt effective des éléments mobiles du moteur, peut être obtenu après un nombre de tours de la partie mobile en rotation du moteur allant de deux à six tours.

Dans le cas d'un arrêt programmé et déterminé suivant l'invention, le redémarrage avec une injection de carburant dans un cylindre bien déterminé permet d'obtenir un démarrage, c'est-à-dire une première combustion dans les cylindres du moteur, en un quart de tour environ du vilebrequin. Dans le cas où l'on ne réalise pas d'injection au cours du dernier tour avant l'arrêt, on réalise le démarrage en un tour un quart.

Le procédé suivant l'invention permet donc de solliciter beaucoup moins le démarreur et de rendre le redémarrage beaucoup plus rapide avec une moindre pollution par les gaz d'échappement.

Dans le cas d'un moteur à allumage commandé pour le redémarrage rapide du moteur à chaud, par exemple dans le cadre d'une fonction du type "stop and start", on utilise le procédé de réglage de l'arrêt du moteur suivant l'invention, de manière à obtenir une position programmée d'arrêt des éléments mobiles du moteur, cette position étant gardée en mémoire par le calculateur du véhicule automobile.

L'arrêt du moteur est commandé par l'interruption de l'injection de carburant et/ou par l'interruption de l'allumage, les deux ordres de coupure correspondants pouvant être donnés simultanément ou à des instants différents.

De plus, on réalise, pendant l'arrêt du moteur, au cours du dernier tour avant l'arrêt, une injection de charges fraîches de carburant dans la tubulure d'admission d'un cylindre du moteur en phase d'admission pour préparer le redémarrage du moteur. Cette injection est réalisée de manière précise, dans une première position bien déterminée de la partie tournante du moteur et donc du ou des pistons dans le ou les cylindres. On peut également réaliser au moins deux injections dans des tubulures d'admission de cylindres bien déterminés du moteur, lors de l'arrêt.

En outre, pour réaliser le redémarrage, après un arrêt dans une position déterminée des éléments mobiles du moteur avec injection de charges fraîches dans les cylindres du moteur pendant l'arrêt, on effectue un allumage des charges dès le premier tour de rotation du vilebrequin, en contrôlant, grâce à une cible physique solidaire du vilebrequin, la position précise des organes mobiles du moteur. On commande ainsi l'allumage-de la charge de carburant dans le cylindre arrêté en position de compression, puis dans le cylindre arrêté en phase d'admission. Ces allumages correspondent à des secondes positions bien déterminées de la partie tournante du moteur. De manière plus générale, on effectue une injection calibrée et un allumage séquentiels de charges de carburant, dans les cylindres du moteur, suivant un ordre prédéterminé.

Il est à remarquer que, contrairement au cas des moteurs à injection directe de carburant dans les cylindres, l'injection de charges fraîches pendant l'arrêt du moteur doit être réalisée, dans le cas des moteurs à injection indirecte, dans des tubulures de cylindres bien déterminés et généralement en phase d'admission. L'injection doit également être effectuée juste avant l'arrêt du moteur, dans le dernier tour avant l'arrêt. L'injection de charges dosées dans un cylindre bien déterminé permet de réduire la consommation de carburant et les rejets de polluants dans les gaz d'échappement.

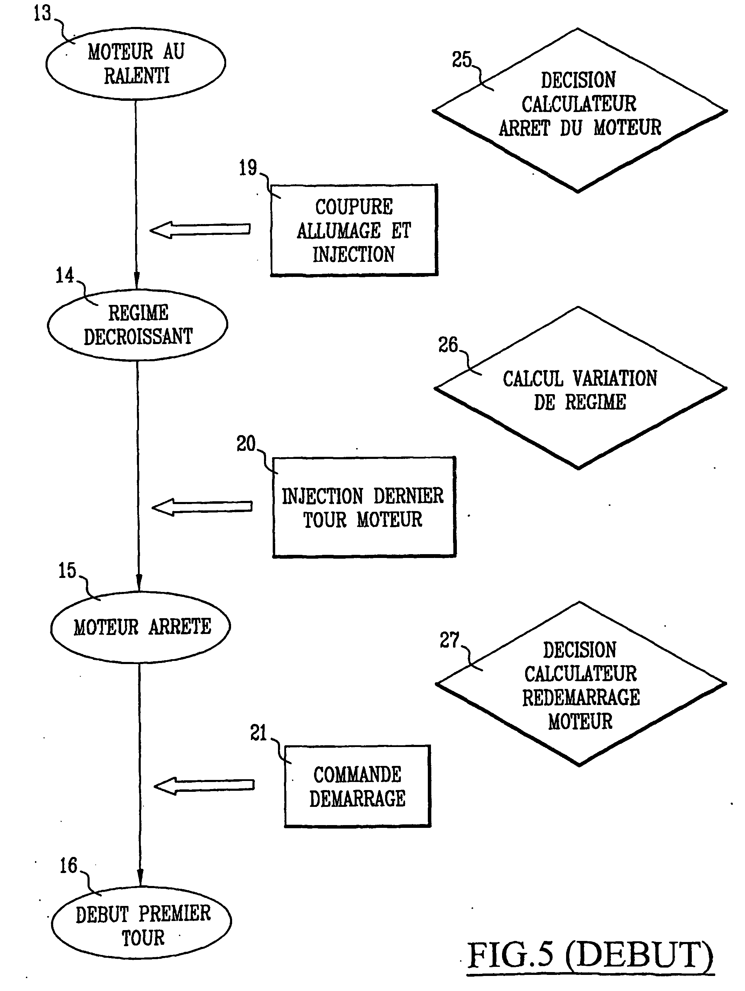

Comme il est visible sur la figure 4, le volant 3 solidaire du vilebrequin 2 porte deux cibles 12 et 12' placées à 180° l'une de l'autre, en considérant une rotation autour de l'axe commun au volant 3 et au vilebrequin 2.

Le capteur 7 qui est de préférence un capteur à effet Hall détecte le passage des cibles 12 et 12' dans une position correspondant au point mort haut des pistons dans les cylindres du moteur.

Au passage d'une cible, le capteur 7 commande le chargement d'une des bobines assurant l'allumage dans un cylindre, pendant un temps très court et provoque l'allumage dans le cylindre. On provoque ainsi l'allumage dans un cylindre en compression très peu de temps après la mise en rotation du moteur pour le redémarrage, du fait de l'obtention d'une position d'arrêt précise du moteur et de la détermination du premier cylindre en compression dans lequel on doit réaliser l'allumage. L'allumage dans le premier cylindre en compression est réalisé après un quart de tour du vilebrequin au plus.

L'injection de carburant pendant l'arrêt du moteur peut être effectuée de manière à limiter la consommation et la pollution par les gaz d'échappement. En effet, il n'est pas obligatoire d'injecter du carburant dans tous les cylindres après l'ordre d'arrêt du moteur, mais seulement dans ceux qui vont servir pour le redémarrage rapide du moteur, c'est-à-dire essentiellement le cylindre dont le piston s'arrête en phase de compression et éventuellement celui dont le piston s'arrête en phase d'admission. Le moment propice pour injecter le carburant dans les cylindres voulus peut être déduit de la mesure de vitesse du moteur pendant l'arrêt effectuée par un capteur adapté qui peut être le capteur 7 représenté sur les figures 1 et 4.

Il est possible également, pour commander l'allumage au moment du redémarrage du moteur, de disposer quatre cibles sur l'arbre à cames du moteur et un capteur à effet Hall dans une position permettant de détecter le passages des cibles.

Le capteur à effet Hall du passage des cibles de l'arbre à cames est utilisé de préférence pour déterminer les phases dans les cylindres du moteur, le capteur à effet Hall associé au volant solidaire du vilebrequin étant utilisé de préférence pour commander l'allumage dans les cylindres assurant le démarrage.

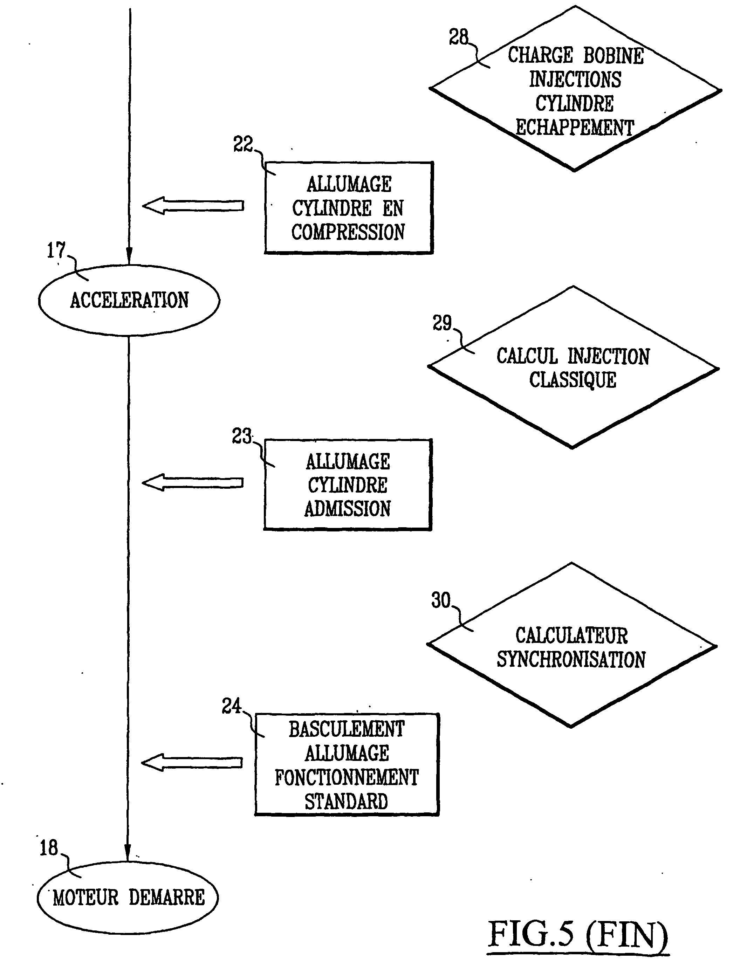

Sur le logigramme de la figure 5, on a représenté dans la partie gauche du logigramme, à l'intérieur de cadres de forme ovale, les différentes phases de fonctionnement du moteur, dans la partie centrale du logigramme, à l'intérieur de rectangles, les actions effectuées sur les organes du moteur et, dans la partie droite du logigramme, à l'intérieur de losanges, les actions effectuées par le calculateur pour l'arrêt et le démarrage du moteur.

Le logigramme de la figure 5 a été établi dans le cadre d'un arrêt et d'un redémarrage, pour accomplir une fonction "stop and start".

On utilise un capteur inductif placé au voisinage du volant solidaire du vilebrequin pour commander l'allumage et les injections de carburant dans les cylindres voulus et un capteur à effet Hall du passage de quatre cibles solidaires de l'arbre à cames, pour la reconnaissance des phases du moteur.

Les différents états du moteur qui correspondent aux cadres de forme ovale dans la partie gauche du logigramme sont repérés par les références 13 à 18 qui correspondent aux actions suivantes :
13 : le moteur tourne au régime de ralenti,
14 : le moteur ralentit depuis son régime de ralenti,
15 : le moteur est arrêté,
16 : le moteur entame son premier tour,
17 : accélération du moteur,
18 : le moteur est démarré.

Les fonctions correspondantes effectuées sur les éléments du moteur sont indiquées dans les cadres rectangulaires 19 à 24 dont la signification est donnée ci-dessous :
19 : coupure de l'allumage et de l'injection du moteur,
20 : prédiction de la phase d'arrêt du moteur et injection de carburant au cours du dernier tour du moteur,
21 : commande du démarreur,
22 : allumage dans le cylindre C₁ arrêté en phase de compression,
23 : allumage dans le cylindre C₃ arrêté en phase d'admission,
24 : passage du calculateur au fonctionnement standard pour l'allumage du moteur.

Les actions effectuées par le calculateur figurant dans les cadres en forme de losange 25 à 30 sont les suivantes :
25 : décision du calculateur d'arrêter le moteur pour effectuer la fonction "stop and start",
26 : calcul des variations du régime moteur à partir des mesures du capteur associé au volant puis à partir du capteur associé à l'arbre à cames dans les derniers tours du moteur,
27 : décision du calculateur de redémarrer le moteur pour effectuer la fonction "stop and start",
28 : début de charge d'une bobine au passage d'une cible devant le capteur associé à l'arbre à cames et injection de carburant dans la tubulure du cylindre C₄ en phase d'échappement,
29 : passage au calcul d'avance et d'injection classique dans le moteur,
30 : vérification de la synchronisation du calculateur avec le capteur associé au vilebrequin.

A partir du logigramme de la figure 5 et des tableaux 1, 2 et 3 ci-dessous, on peut expliquer la mise-en oeuvre du procédé selon l'invention pour réaliser l'arrêt et le redémarrage d'un moteur à allumage commandé dans des conditions optimales pour la mise en oeuvre de la fonction "stop and start".

La suite des opérations dans les cylindres sera décrite dans les tableaux 1, 2 et 3 avec les indications abrégées suivantes :
- Adm: Admission
- Inj: Injection
- Ech: Echappement
- Comp: Compression
- Comb: Combustion
- Det: Détente
- A: Allumage
- Arr: Arrêt complet du moteur.

Le tableau 1 donne les séquences des opérations dans chacun des cylindres, pendant le fonctionnement normal du moteur.

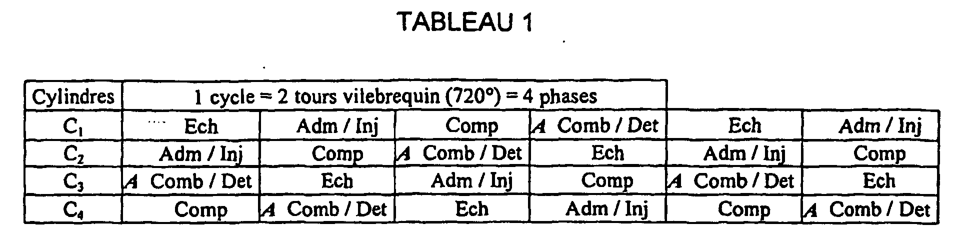

L'ordre d'allumage des cylindres est le suivant : C₁, C₃, C₄, C₂, C₁, ...

Le véhicule automobile étant arrêté et le moteur tournant au régime de ralenti, le calculateur décide d'arrêter le moteur pour effectuer la fonction "stop and start". Le calculateur commande la coupure de l'allumage et de l'injection (éventuellement à des instants différents). Le moteur perd de la vitesse à partir du régime de ralenti et, pendant l'arrêt du moteur, le calculateur détermine la variation de régime du moteur et la position d'arrêt.

On effectue, pendant le dernier tour du moteur, une injection isolée de carburant dans l'un au moins des cylindres et généralement on réalise l'injection de deux charges fraîches de carburant dans le cylindre dont le piston s'arrête en compression et dans le cylindre dans lequel le piston s'arrête en phase d'admission. Le tableau 2 donne les séquences des opérations dans chacun des cylindres C₁, C₂, C₃ et C₄, pendant la phase d'arrêt du moteur.

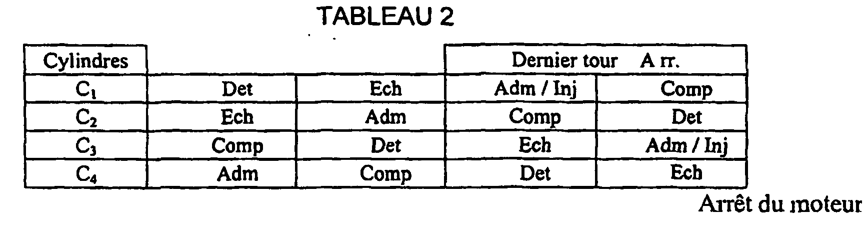

Pendant la phase d'arrêt du moteur, l'injection et l'allumage sont coupés. Il ne se produit pas de combustion.

On injecte, pendant le dernier tour, du carburant dans les cylindres dans lesquels on réalisera l'allumage le plus tôt après le redémarrage, c'est-à-dire dans le cylindre C₁ dans lequel on effectue une phase complète d'admission pendant le dernier tour du moteur et qui est en phase de compression au moment de l'arrêt complet et dans le cylindre C₃ en phase d'admission, au moment de l'arrêt.

Après un arrêt du moteur, le calculateur décide de redémarrer le moteur pour compléter la fonction "stop and start". Le calculateur commande l'alimentation du démarreur et le moteur entame son premier tour.

Au passage d'une cible devant le capteur de l'arbre à cames (capteur à effet Hall), le calculateur commande le début de charge d'une bobine d'allumage correspondant au cylindre C₁ arrêté en compression. Parallèlement, le calculateur commande une injection de carburant dans la tubulure du cylindre C₄ arrêté en phase d'échappement. L'allumage dans le cylindre C₁ arrêté en compression est alors effectué, soit après un temps de charge minimal de la bobine (allumage temporisé) soit lorsqu'on repère le front descendant du signal de la cible.

Le moteur est alors accéléré par le déplacement du piston qui était arrêté en compression dans le cylindre C₁.

Le calculateur passe alors à un mode de calcul d'allumage et d'injection classique pour la conduite du moteur, ce passage étant effectué soit au début de la charge de la bobine par passage d'une cible devant le capteur de l'arbre à cames, soit par repérage de dents manquantes sur une denture du volant.

On effectue alors un allumage dans le cylindre C₃ dans lequel le piston était arrêté en admission au moment de l'arrêt du moteur, le moteur est alors démarré et son contrôle est effectué par le calculateur en fonctionnement standard. La phase de redémarrage est décrite dans le tableau 3 ci-dessous.

Les opérations effectuées dans les cylindres C₁, C₂, C₃ et C₄ lors du redémarrage sont décrites dans le tableau 3

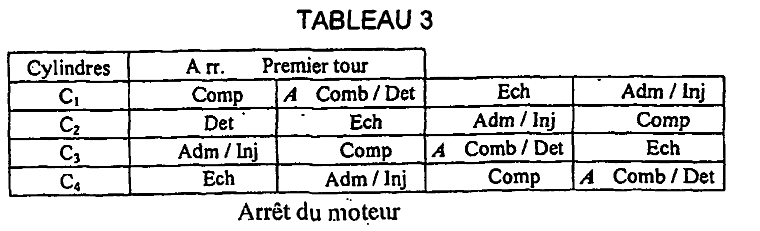

On commande l'allumage dans le cylindre C₁ où le mélange air-essence a été préparé avant l'arrêt puis comprimé, puis dans le cylindre C₃. Les autres cylindres poursuivent leur séquence normales.

Les principaux avantages du procédé suivant l'invention sont d'obtenir une grande régularité de l'arrêt du moteur avec une faible dispersion de la position d'arrêt qui est favorable pour le redémarrage du moteur, d'améliorer la synchronisation de l'injection avec les phases des cylindres du moteur et de diminuer la pollution des gaz d'échappement.

Dans le cas d'un moteur à allumage commandé, le procédé suivant l'invention permet de réaliser le démarrage dès le premier tour du vilebrequin, ce qui présente un grand avantage, dans le cas de la mise en application de la fonction "stop and start".

Sur la figure 6, on a représenté les variations du régime d'un moteur à injection indirecte et allumage commandé, en fonction du temps, lors d'un redémarrage à chaud, dans le cas d'un arrêt et d'un redémarrage réalisé suivant l'invention (courbe 31) ou suivant une technique habituelle de mise en oeuvre de la fonction "stop and start" (courbe 32).

Dans le cas du procédé suivant l'invention, on atteint un régime stable plus rapidement et à un niveau sensiblement plus bas du régime moteur.

On limite ainsi fortement la survitesse de rotation du moteur au moment du démarrage (overshoot) ainsi que la consommation de carburant et les rejets de polluants à l'échappement.

Le démarrage est en outre plus doux, ce qui présente un grand intérêt quant au confort du véhicule automobile propulsé par le moteur et la tenue du moteur en service de longue durée.

En particulier, un calibrage précis des injections séquentielles réalisées dans les cylindres et de l'allumage au moment du redémarrage permet d'obtenir un redémarrage doux en limitant les oscillations par réglage des quantités injectées et des temps d'ouverture des soupapes d'admission.

Un réglage précis des injections et de l'allumage au cours du démarrage permet de calmer les oscillations.

L'invention ne se limite pas strictement aux modes de réalisation qui ont été décrits.

C'est ainsi que la position angulaire du vilebrequin ou de l'arbre à cames du moteur peut être repérée d'une manière différente de celles qui ont été décrites en utilisant tout type de cible et de capteur adapté.

Les mesures de vitesse et de position du vilebrequin peuvent être effectuées par tout moyen présent sur le véhicule automobile ou tout moyen spécifique utilisé pour la mise en oeuvre du procédé de l'invention.

Les injections pendant la phase conduisant à l'arrêt du moteur, dans le cas d'un moteur à-allumage commandé, doivent être réalisées de manière très précise, ce qui peut nécessiter l'utilisation de moyens particuliers.

L'invention s'applique à tout moteur à injection indirecte et à allumage commandé.

Dans le cas d'un moteur à allumage commandé, l'arrêt du moteur peut être obtenu par interruption de l'allumage et/ou de l'injection, ces deux opérations pouvant être effectuées simultanément ou séparément. Au redémarrage, la commande d'allumage à un instant précis dans le cylindre en compression au moment de l'arrêt du moteur puis dans le cylindre en position d'admission lors de l'arrêt permet de réaliser le démarrage du moteur dès le premier tour du vilebrequin, de manière reproductible.

L'invention s'applique en particulier aux véhicules automobiles dont le calculateur permet d'effectuer la fonction "stop and start" pour l'arrêt et le redémarrage du moteur, de manière automatique.

## Revendications

1. Procédé d'arrêt et de redémarrage d'un moteur à combustion interne à injection indirecte et à allumage commandé (1) comportant au moins un cylindre (C₁, C₂, C₃, C₄) dans lequel se déplace un piston et une tubulure d'admission de carburant communiquant avec le cylindre et une partie tournante (23) mise en rotation par le piston, par l'intermédiaire d'une bielle, **caractérisé par le fait :**
- **qu'**on mesure en continu la vitesse de rotation et la position du piston et de la partie tournante (23) du moteur (1), et qu'on coupe l'injection de carburant pour des valeurs prédéterminées de la vitesse et de la position angulaire de la partie tournante (23) du moteur (1) pour obtenir l'arrêt du piston et de la partie tournante dans une position prédéterminée,
- **qu'**on injecte une charge de carburant dans la tubulure d'admission du cylindre (C₁) en phase d'admission pendant un dernier tour du moteur (1) avant l'arrêt en position prédéterminée,
- **qu'**au redémarrage du moteur après l'arrêt par mise en rotation de la partie tournante (23) du moteur, on repère la réalisation de la phase de compression dans le cylindre (C₁) et on réalise un allumage de la charge dans le cylindre (C₁) en phase de compression, et
- **qu'**on effectue l'injection et l'allumage de charges successives dans l'au moins un cylindre (C₁, C₂, C₃, C₄) suivant une séquence prédéterminée, afin d'optimiser la consommation et les émissions et de limiter la survitesse du moteur (1) au démarrage, favorisant ainsi la qualité du démarrage.

2. Procédé suivant la revendication 1, **caractérisé par le fait qu'**on mesure la vitesse et la position angulaire de la partie tournante (2, 3) du moteur (1), à l'aide d'au moins un capteur (7) de la vitesse et de la position angulaire d'un volant (3) solidaire d'un vilebrequin (2) du moteur (1).

3. Procédé suivant l'une quelconque des revendications 1 et 2, **caractérisé par le fait :**
- **qu'**on mesure en continu la vitesse de rotation et la position angulaire de la partie tournante (2, 3) du moteur (1), et
- **qu'**on interrompt l'un au moins de l'allumage et de l'injection de carburant pour des valeurs prédéterminées de la vitesse et de la position angulaire de la partie tournante (2, 3) du moteur (1), pour obtenir l'arrêt des parties mobiles (2, 3) du moteur dans une position prédéterminée permettant de faciliter le redémarrage du moteur (1).

4. Procédé suivant la revendication 3, **caractérisé par le fait qu'**on détermine la vitesse et la position angulaire de la partie tournante (2, 3) du moteur (1) à l'aide d'un capteur de la vitesse et de la position angulaire de l'un au moins d'un volant (3) solidaire d'un vilebrequin (2) du moteur (1) et d'un arbre à cames de commande des soupapes du moteur (1).

5. Procédé suivant la revendication 1, **caractérisé par le fait qu'**on réalise le redémarrage du moteur, en un quart de tour au plus de l'ensemble (2, 3) du moteur (1) et en un tour un quart si l'on ne réalise pas d'injection au cours du dernier tour avant l'arrêt.

6. Procédé suivant l'une quelconque des revendications 1 à-5, dans le cas d'un moteur comportant plusieurs cylindres (C₁, C₂, C₃, C₄), et de préférence quatre cylindres, en ligne, **caractérisé par le fait que**, pendant le dernier tour avant l'arrêt du moteur précédant le redémarrage, on injecte des charges de carburant dans la tubulure d'admission du cylindre (C₁) du moteur dans lequel le piston est en position d'admission pendant le dernier tour avant l'arrêt du moteur et en position de compression au moment de l'arrêt, et dans un second cylindre (C₃) du moteur en phase d'admission au moment de l'arrêt.

7. Procédé suivant l'une quelconque des revendications 1 à 4, **caractérisé par le fait que**, pour le redémarrage du moteur, on réalise un allumage dans le cylindre (C₁) dont le piston est en position de compression au moment de l'arrêt du moteur (1), puis dans le cylindre (C₃) dans lequel le piston est en position d'admission au moment de l'arrêt du moteur (1).

8. Procédé suivant l'une quelconque des revendications 1 à 7, **caractérisé par le fait qu'**on réalise un calibrage précis des injections séquentielles et de l'allumage à réaliser pendant le redémarrage et qu'on réalise les injections séquentielles et l'allumage selon les valeurs obtenues par le calibrage.

9. Procédé suivant la revendication 8, **caractérisé par le fait qu'**on détermine par le calibrage les quantités de carburant à injecter séquentiellement dans les cylindres (C₁, C₂, C₃, C₄) et les angles d'allumage, pendant le redémarrage du moteur (1).

## Patentansprüche

1. Verfahren zum Anhalten und zum Neustarten eines Verbrennungsmotors mit indirekter Einspritzung und gesteuerter Zündung (1) mit mindestens einem Zylinder (C₁, C₂, C₃, C₄), in dem sich ein Kolben verschiebt, und einem Ansaugstutzen für Kraftstoff, der mit dem Zylinder in Verbindung steht, und einem sich drehenden Teil (23), der durch den Kolben mittels einer Pleuelstange in Rotation versetzt wird, **dadurch gekennzeichnet, daß**:
- man kontinuierlich die Drehzahl und die Position des Kolbens und des sich drehenden Teils (23) des Motors (1) mißt und man die Kraftstoffeinspritzung für vorbestimmte Werte der Drehzahl und der Winkelposition des sich drehenden Teils (23) des Motors (1) unterbricht, um das Anhalten des Kolbens und des sich drehenden Teils in einer vorbestimmten Position zu erhalten,
- man eine Kraftstoffladung in den Ansaugstutzen des Zylinders (C₁) in der Ansaugphase während einer letzten Umdrehung des Motors (1) vor dem Anhalten in der vorbestimmten Position einspritzt,
- man beim Neustart des Motors nach dem Anhalten, indem der sich drehende Teil (23) des Motors in Rotation versetzt wird, die Ausführung der Kompressionsphase im Zylinder (C₁) lokalisiert und man eine Zündung der Ladung im Zylinder (C₁) in der Kompressionsphase ausführt, und
- man die Einspritzung und die Zündung von aufeinanderfolgenden Ladungen in zumindest einem Zylinder (C₁, C₂, C₃, C₄) gemäß einer vorbestimmten Sequenz durchführt, um den Verbrauch und die Emissionen zu optimieren und die Überdrehzahl des Motors (1) beim Start zu begrenzen, was folglich die Qualität des Starts begünstigt.

2. Verfahren nach Anspruch 1, **dadurch gekennzeichnet, daß** man die Drehzahl und die Winkelposition des sich drehenden Teils (2, 3) des Motors (1) mit Hilfe mindestens eines Sensors (7) für die Drehzahl und die Winkelposition eines Schwungrades (3), das mit einer Kurbelwelle (2) des Motors (1) fest verbunden ist, mißt.

3. Verfahren nach einem der Ansprüche 1 und 2, **dadurch gekennzeichnet, daß**:
- man kontinuierlich die Drehzahl und die Winkelposition des sich drehenden Teils (2, 3) des Motors (1) mißt, und
- man zumindest eine der Zündung und der Kraftstoffeinspritzung für vorbestimmte Werte der Drehzahl und der Winkelposition des sich drehenden Teils (2, 3) des Motors (1) unterbricht, um das Anhalten der beweglichen Teile (2, 3) des Motors in einer vorbestimmten Position zu erhalten, die es ermöglicht, den Neustart des Motors (1) zu erleichtern.

4. Verfahren nach Anspruch 3, **dadurch gekennzeichnet, daß** man die Drehzahl und die Winkelposition des sich drehenden Teils (2, 3) des Motors (1) mit Hilfe eines Sensors für die Drehzahl und die Winkelposition von zumindest einem eines Schwungrades (3), das mit einer Kurbelwelle (2) des Motors (1) fest verbunden ist, und einer Nockenwelle zur Steuerung der Ventile des Motors (1) bestimmt.

5. Verfahren nach Anspruch 1, **dadurch gekennzeichnet, daß** man den Neustart des Motors in höchstens einer Viertelumdrehung der Baugruppe (2, 3) des Motors (1) und in einer Viertelumdrehung, wenn man keine Einspritzung während der letzten Umdrehung vor dem Anhalten ausführt, durchführt.

6. Verfahren nach einem der Ansprüche 1 bis 5 im Fall eines Motors mit mehreren Zylindern (C₁, C₂, C₃, C₄) und vorzugsweise vier Zylindern in einer Linie, **dadurch gekennzeichnet, daß** man während der letzten Umdrehung vor dem Anhalten des Motors vor dem Neustart Kraftstoffladungen in den Ansaugstutzen des Zylinders (C₁) des Motors einspritzt, in welchem sich der Kolben während der letzten Umdrehung vor dem Anhalten des Motors in der Ansaugposition und im Moment des Anhaltens in der Kompressionsposition befindet, und in einen zweiten Zylinder (C₃) des Motors in der Ansaugphase im Moment des Anhaltens.

7. Verfahren nach einem der Ansprüche 1 bis 4, **dadurch gekennzeichnet, daß** man für den Neustart des Motors eine Zündung im Zylinder (C₁) ausführt, dessen Kolben sich im Moment des Anhaltens des Motors (1) in der Kompressionsposition befindet, dann im Zylinder (C₃), in dem sich der Kolben im Moment des Anhaltens des Motors (1) in der Ansaugposition befindet.

8. Verfahren nach einem der Ansprüche 1 bis 7, **dadurch gekennzeichnet, daß** man eine genaue Kalibrierung der aufeinanderfolgenden Einspritzungen und der Zündung, die während des Neustarts auszuführen sind, durchführt und man die aufeinanderfolgenden Einspritzungen und die Zündung gemäß den durch die Kalibrierung erhaltenen Werten durchführt.

9. Verfahren nach Anspruch 8, **dadurch gekennzeichnet, daß** man durch die Kalibrierung die nacheinander in die Zylinder (C₁, C₂, C₃, C₄) einzuspritzenden Kraftstoffmengen und die Zündwinkel während des Neustarts des Motors (1) bestimmt.

## Claims

1. Method of stopping and restarting an internal combustion engine with indirect injection and spark ignition (1), comprising at least one cylinder (C₁, C₂, C₃, C₄) in which a piston, a fuel inlet manifold communicating with the cylinder and a rotating part (23) set in rotation by the piston by way of a connecting rod, move, **characterised in that**:
- the speed of rotation and the position of the piston and of the rotating part (23) of the engine (1) are measured continuously, and the fuel injection is cut off at predetermined values of the speed and angular position of the rotating part (23) of the engine (1) in order to stop the piston and the rotating part in a predetermined position,
- a fuel feedstock is injected into the inlet manifold of the cylinder (C₁) in the intake phase during the last revolution of the engine (1) before stopping in a predetermined position,
- upon restarting of the engine after it has stopped, by setting the rotating part (23) of the engine in rotation, the implementation of the compression phase in the cylinder (C₁) is identified and ignition of the feedstock is carried out in the cylinder (C₁) in the compression phase, and
- the injection and ignition of successive feedstocks in at least one cylinder (C₁, C₂, C₃, C₄) are carried out according to a predetermined sequence, in order to optimise the consumption and the emissions and to limit the overspeed of the engine (1) during starting, thus favouring the quality of the start.

2. Method as claimed in Claim 1, **characterised in that** the speed and the angular position of the rotating part (2, 3) of the engine (1) are measured with the aid of at least one sensor (7) for the speed and the angular position of a flywheel (3) which is integral with a crankshaft (2) of the engine (1).

3. Method as claimed in any one of Claims 1 and 2, **characterised in that**:
- the speed of rotation and the angular position of the rotating part (2, 3) of the engine (1) are measured continuously, and
- one at least of the ignition and the fuel injection is interrupted at predetermined values of the speed and angular position of the rotating part (2, 3) of the engine (1) in order to stop the mobile parts (2, 3) of the engine (1) in a predetermined position making it possible to facilitate restarting of the engine (1).

4. Method as claimed in Claim 3, **characterised in that** the speed and the angular position of the rotating part (2, 3) of the engine (1) are determined with the aid of a sensor for the speed and the angular position of one at least of a flywheel (3) which is integral with a crankshaft (2) of the engine (1) and a camshaft for controlling the valves of the engine (1).

5. Method as claimed in Claim 1, **characterised in that** the engine is restarted in at most a quarter revolution of the assembly (2, 3) of the engine (1), and in one and a quarter revolutions if injection is not carried out in the course of the last revolution before stopping.

6. Method as claimed in any one of Claims 1 to 5, in the case of an engine comprising a plurality of cylinders (C₁, C₂, C₃, C₄), and preferably four cylinders, in line, **characterised in that** during the last revolution before the stopping of the engine preceding the restart, fuel feedstocks are injected into the inlet manifold of the cylinder (C₁) of the engine in which the piston is in the intake position during the last revolution before the stopping of the engine and in the compression position at the moment of stopping, and into a second cylinder (C₃) of the engine in the intake phase at the moment of stopping.

7. Method as claimed in any one of Claims 1 to 4, **characterised in that** in order to restart the engine ignition is carried out in the cylinder (C₁), the piston of which is in the compression position at the moment of stopping of the engine, then in the cylinder (C₃) in which the piston is in the intake position at the moment of stopping of the engine.

8. Method as claimed in any one of Claims 1 to 7, **characterised in that** precise calibration of the sequential injections and of the ignition is carried out during the restarting and that the sequential injections and the ignition are carried out according to the values obtained by the calibration.

9. Method as claimed in Claim 8, **characterised in that** during restarting of the engine the quantities of fuel to be injected sequentially into the cylinders (C₁, C₂, C₃, C₄) and the ignition angles are determined by the calibration.
